Europäisches Patentamt

European Patent Office

Office européen des brevets

(19)

(11) Veröffentlichungsnummer: **0 108 419 B1**

# EUROPÄISCHE PATENTSCHRIFT

(12)

(45) Veröffentlichungstag der Patentschrift: **21.08.91**

(51) Int. Cl.⁵: **G06F 9/26**

(21) Anmeldenummer: **83111107.5**

(22) Anmeldetag: **07.11.83**

(54) **Vorrichtung und Verfahren zur Folgeadress-Bildung eines mikroprogramm-gesteuerten Sequenzers.**

(30) Priorität: **09.11.82 DE 3241346**

(43) Veröffentlichungstag der Anmeldung:
**16.05.84 Patentblatt 84/20**

(45) Bekanntmachung des Hinweises auf die
Patenterteilung:
**21.08.91 Patentblatt 91/34**

(84) Benannte Vertragsstaaten:
**AT DE FR GB IT**

(56) Entgegenhaltungen:

ELECTRONICS LETTERS, Band 17, Nr. 19,
September 1981, Seiten 709-710, London,
GB; C.A. PAPACHRISTOU: "Method for direct
multiway branching in microprogram control"

IBM TECHNICAL DISCLOSURE BULLETIN,
Band 13, Nr. 2, Juli 1970, Seiten 472-473, New
York, US; H. NIEDERREITER: "Instruction sequencing control unit"

(73) Patentinhaber: **Siemens Aktiengesellschaft**
**Wittelsbacherplatz 2**
**W-8000 München 2(DE)**

(72) Erfinder: **Stadlmeier, Hans, Dipl.-Ing.**
**Aichacher Strasse 2**
**W-8000 München 70(DE)**
Erfinder: **Schönberger, Franz, Dipl.-Ing.**
**Grasmückenweg 23**
**W-8000 München 45(DE)**

**Beschreibung**

Die Erfindung betrifft eine Vorrichtung nach dem Oberbegriff des Patentanspruchs 1 und ein Verfahren nach dem Oberbegriff des Anspruchs 5 zur Folgeadreß-Bildung eines mikroprogramm-gesteuerten Sequenzers.

Beispielsweise besitzt ein integrierter Hochleistungs-DMA-Kontroller ADMA (advanced direct memory access) vier voneinander unabhängige Kanäle, die den Datentransfer zwischen Medien (Speicher, Peripherie-Geräte) oder allgemeiner gesprochen zwischen Datenquellen- und Datensenken bewerkstelligen.

Die Hauptsteuerung der Kanäle übernehmen Mikroprogramme, deren Mikrobefehlsfolge von einem Sequenzer gesteuert wird. Die Arbeitsweise eines Sequenzers besteht darin, abhängig von entsprechenden Steuerinformationen und zu testenden Zuständen eine Verzweigungsadresse bei erfülltem Test bzw. eine 'continue'-Adresse (Linearfall) bei nicht erfülltem Test zur Verfügung zu stellen.

In Anbetracht der komplexen und zeitkritischen Aufgaben des ADMA ist die Sequenzsteuerung (Steuerung der Mikrobefehlsfolge) von einer Vielzahl von Parametern abhängig, so daß verschiedene, mit unterschiedlichen Prioritäten versehene Steuerfunktionen notwendig sind, um die Folgemikroadresse zu bilden.

Aus ELECTRONIC LETTERS, Band 17, Nr. 19, September 1981, Seiten 709 bis 710 ist ein Mikrosequenzer bekannt, der durch eine PLA realisiert ist. Bei solchen Mikrosequenzern sind nur feste Sprungadressen in Abhängigkeit von der PLA-Belegung generierbar. Solche Mikrosequenzer ermöglichen nicht das Generieren sowohl fester Sprungadressen als auch veränderlicher Sprungadressen.

Der vorliegenden Erfindung liegt die Aufgabe zugrunde, eine Vorrichtung und ein Verfahren der eingangs genannten Art anzugeben, mit denen sich durch optimale Verteilung der Aufgaben und Funktionen auf Mikrobefehl, Hardware-Logiken und Steuerregister große Mächtigkeit der Steuerfunktionen sowie optimale Flexibilität der Steuerung bei geringer Belastung der Mikroworte und guter Testbarkeit eines vom Sequenzer gesteuerten elektronischen Bauteils erreichen lassen.

Diese Aufgabe wird erfindungsgemäß durch eine Vorrichtung nach dem Anspruch 1 und durch ein Verfahren nach dem Anspruch 5 gelöst. Ausgestaltungen und Vorteile der Erfindung sind in den Unteransprüchen, der Beschreibung und der Zeichnung dargestellt.

Im ADMA lassen sich vier Hauptgruppen von Folgemikroadressen unterscheiden, aus denen der Sequenzer jeweils eine auswählt. Diese vier Hauptgruppen von Folgemikroadressen werden im folgenden in steigender Priorität beschrieben:

a) Linearfolgeadresse oder 'continue'-Adresse:

Sie wird ausgewählt, wenn Keine Sprungbedingung oder sonstige weiter unten beschriebene Bedingungen vorhanden und erfüllt sind. Die 'continue'-Adresse hängt aber noch von einem weiteren Parameter ab, nämlich dem Typ des Mikrobefehls. Bei sogenannten Organisations-Mikrobefehlen ist die 'continue'-Adresse üblicherweise die um 1 inkrementierte Mikroadresse des aktuellen, laufenden Mikrobefehls; bei sogenannten DMA-Befehlen oder allgemeiner bei Nicht-Organisations-Mikrobefehlen ist die 'continue'-Adresse gleich der aktuellen, laufenden Mikrobefehlsadresse.

b) Sprungadresse:

Sie wird ausgewählt, wenn die von einer Steuerfunktion (jump control) angegebenen Bedingungen erfüllt sind. Ein und dieselbe 'jump control' soll, wenn sie in verschiedenen Mikrobefehlen verwendet wird, unterschiedliche Sprungadressen liefern Beispiel: Die 'jump control' "not another source byte?" führt bei erfüllter Bedingung dieser 'jump control' zum Sprung auf den Destination-(Datensenke)-DMA-Mikrobefehl des zugehörigen DMA-Mikroprogramms.

c) Mapadresse:

Sie wird ausgewählt, wenn die von einer Steuerfunktion ('map control') angegebenen Bedingungen erfüllt sind. Die Steuerfunktion 'map control' hat eine höhere Priorität als die Steuerfunktion 'jump control', das bedeutet, daß bei erfüllter 'map'-Bedingung trotz gegebenenfalls ebenfalls erfüllter 'jump'-Bedingung die Mapadresse erzeugt wird.

Im Unterschied zur Steuerfunktion 'jump control' führt ein und dieselbe Steuerfunktion 'map control', wenn sie in verschiedenen Mikrobefehlen angewandt wird, bei gleichen erfüllten Bedingungen immer zur gleichen Mapmikroprogrammadresse, weil mit einer Mapmikroprogrammadresse im allgemeinen gemeinsame Organisationsprogramme, wie z.B. Ende Behandlung oder Data Chaining angesprungen werden sollen.

Weitere Unterschiede der Steuerfunktion 'map control' zur Steuerfunktion 'jump control' sind:
Eine Steuerfunktion 'map control' kann verschiedene Gruppen von zu testenden Bedingungen ansprechen, die in sich priorisiert sind und damit je nach höchster gültiger Priorität dieser zu testenden Bedingungen verschiedene Mapmikroprogrammadressen erzeugen. Z.B. führt der Mikrobefehl 'Mux Idle Map', der einen Subkanal dazu veranlaßt, auf eine Anforderung zu warten, bei vorliegender Start-/Stop-Subkanal-Anforderung durch die Zentraleinheit (CPU) zur Mapmikroprogrammadresse des zugehörigen Start-/Stop-Mikroprogrammes, während bei gleichzeitig anliegender Anforderung zur Bedienung eines anderen bereits gestarteten Subkanals das zu diesem anderen Subkanal gehörige Mikroprogramm nachrangig ausgeführt wird.

Eine Steuerfunktion 'map control' kann, ohne zu priorisieren, verschiedene Mapmikroprogrammadressen erzeugen (vergleichbar mit einer Mehrfach-Verzweigung) aufgrund der Decodierung von Steuerbits im zentralen Steuerregister ('control register'). Beispiel: Bei einem Transfermap wird die Startadresse der benötigten DMA-Routine bereitgestellt, in Abhängigkeit von Einträgen in den Benutzerzugänglichen Kommando- und Modus-Registern.

d) Testadresse:

Sie wird ausgewählt, wenn die Steuerfunktion 'test control' die Auswahl eines beliebigen Mikrobefehls vorschreibt, und wird mit höchster Priorität gebildet.

Ein Ausführungsbeispiel der Erfindung wird im folgenden anhand der Zeichnung näher beschrieben.

Fig.1    zeigt ein Blockschaltbild für ein Ausführungsbeispiel der Erfindung.

Fig.2    zeigt ein Mikrowort, das bei einem Ausführungsbeispiel der Erfindung verwendet werden Kann.

Fig.3    zeigt das Prinzip einer PLA für einen Mapdecoder.

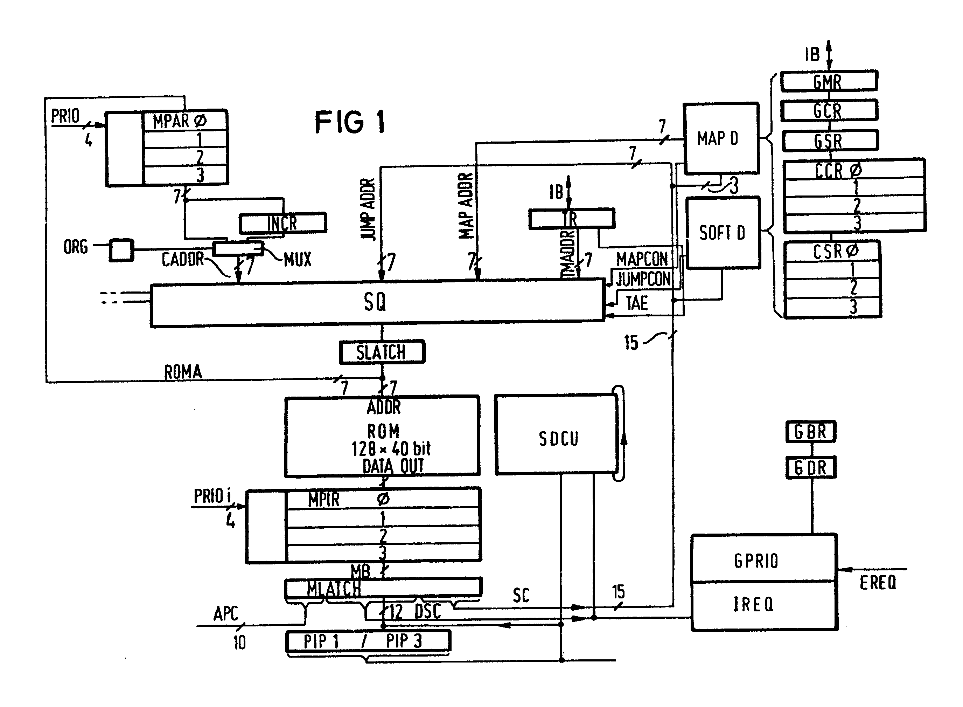

In der Fig.1 ist ein Blockschaltbild für ein Ausführungsbeispiel der Erfindung dargestellt. Der Sequenzer SQ erhält die vier verschiedenen Adressen entsprechend den vorher beschriebenen Hauptgruppen, nämlich die 'continue'-Adresse CADDR, die Sprangadresse JUMPADDR, die Mapadresse MAPADDR und die Testadresse TMADDR. Der Sequenzer SQ wählt je nach den vom Mikrobefehl MB bzw. vom Testregister TR vorliegenden Steuerinformationen deren Prioritäten und den dazugehörigen Testergebnissen eine Mikroprogrammadresse davon aus.

Die Auswahl der 'continue'-Adresse CADDR wird gesteuert durch das Steuerbit ORG aus dem Feld 'instruction pipe control' ITC des Mikrobefehls MB. Bei sogenannten Organisations-Miktobefehlen ist die 'continue'-Adresse die um 1 inkrementierte Mikroprogrammadresse ROMA des aktuellen, laufenden Mikrobefehls MB. Bei sogenannten DMA-Befehlen ist die 'continue'-Adresse CADDR gleich der aktuellen MiKrobefehlsadresse ROMA. Ein eventuell notwendiges Inkrementieren der aktuellen Mikrobefehlsadresse ROMA erfolgt über einen Inkrementer INCR. Das Steuerbit ORG steuert über einen Multiplexer MUX die Auswahl zwischen einer um +1 inkrementierten aktuellen Mikrobefehlsadresse ROMA und einer nicht inkrementierten aktuellen Mikrobefehlsadresse ROMA. Die aktuelle Mikrobefehlsadresse ROMA umfaßt 7 Bit und Kanu in einem kanalspezifischen Mikroadressregister MPARi, i = 0,1,2,3, gespeichert werden. Ein ADMA mit vier Kanälen enthält vier Mikroadreßregister MPARi und für den jeweils zugehörigen Mikrobefehl vier Mikroinstruktionsregister MPIRi. Aus diesen vier Kanälen wird jeweils ein Kanal über ein Signal PRIOi mittels einer Priorisierungseinheit GPRIO ausgewählt. Die Priorisierung eines Kanals erfolgt aufgrund von externen Anforderungen EREQ, von internen Anforderungen IREQ und aufgrund von Anforderungen aus zentralen Steuerregistern GBR, GDR. Die vom Sequenzer SQ ausgewählte Mikroadresse ROMA wird in einem Zwischenspeicher SLATCH zwischengespeichert und liest aus dem Mikrobefehlsspeicher ROM den zugehörigen Mikrobefehl MB aus. Der Mikrobefehlsspeicher ROM unfaßt 128x40 Bit. Der jeweils priorsierte Mikrobefehl MB wird in einem Mikrobefehls-Zwischenspeicher MLATCH zwischengespeichert.

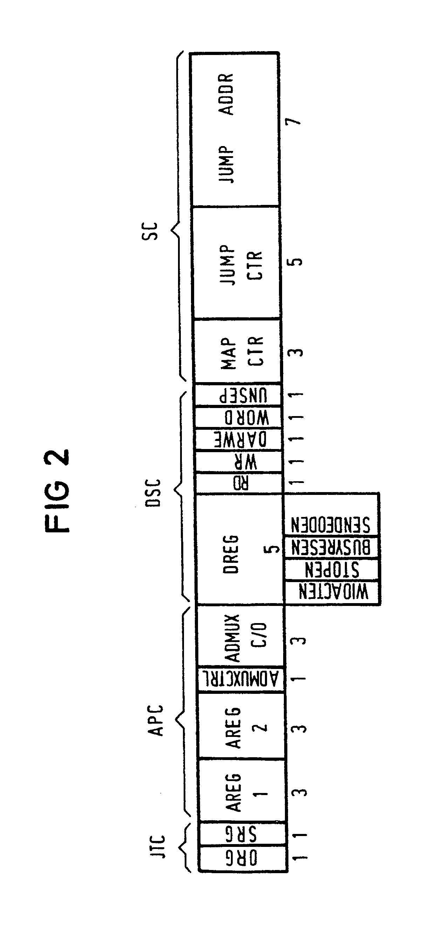

Fig.2 zeigt die verschiedenen Felder eines Mikrowortes MB, wie es in einem erfindungsgemäßen Ausführungsbeispiel nach Fig.1 verwendet werden kann. Das Feld JUMPCTR. ('jump control') im Sequenzsteuerfeld SC des Mikrobefehls MB testet bestimmte Bedingungen und sorgt, wenn diese Bedingungen erfüllt sind, für die Bereitstellung der gleichfalls im Mikrobefehl MB mitgeführten Sprungadresse JUMPADDR. Diese Sprungadresse JUMPADDR wird deshalb im Mikrobefehl MB mitgeführt, weil ein und dieselbe Steuerfunktion JUMPCTR in verschiedenen Mikrobefehlen MB zu unterschiedlichen Sprungadressen JUMPADDR führen. Das Feld Sequenzsteuerung SC des Mikrobefehls MB umfaßt insgesamt 15 Bit. Sieben Bin davon umfaßt die mitgeführte Sprungadresse JUMPADDR und fünf Bit umfassen die Testbedingungen, mit denen ein Soft-Decodierer SOFTD angesteuert wird. Dieser Soft-Decodierer SOFTD überprüft, ob die in dem Feld JUMPCTR enthaltenen Sprungbedingungen aufgrund der in verschiedenen Steuerregistern GMR (Betriebsmodus), GCR und CCR (Start/Stop Stop der Kanäle), GSR und CSR (Status der vier Kanäle) enthaltenen Informationen erfüllt sind. Sind diese Sprungbedingungen JUMPCTR erfüllt, so teilt dies der Soft-Decodierer SOFTD dem Sequenzer SO über ein Signal JUMPCON mit.

Das Feld mit der Mapsteuerung MAPCTR im Mikrobefehl MB steuert die Bildung der Mapadresse MAPADDR. Der Mapdecodierer MAPD überprüft autonom, ob die Map-Steuerfunktion MAPCTR aufgrund der in den Registern GMR, GCR, GSR, CCR und CSR enthaltenen Informationen gültig sind. Außerdem führt der Mapdecoder MAPD autonom eine Priorisierung der verschiedenen von der Mapsteuerung MAPCTR angesprochenen Bedingungen durch. Daraufhin liefert der Mapdecoder MAPD hardwaremäßig die entsprechende Mapadresse MAPADDR. Die Erfüllung der von der Mapsteuerung MAPCTR geforderten Bedingungen wird dem Sequenzer SQ vom Mapdecoder MAPD über ein Signal MAPCON mitgeteilt.

Die Einschleusung der Testadresse TMADDR wird über das Testregister TR vorgenommen. Dieses Testregister TR kann über einen internen Datenbus IB von der Zentraleinheit (CPU) beschrieben werden und ermöglicht den Test des ADMA.

Wird im Testregister TR das TAE('test adress enable')-Bit gesetzt, so wird die ebenfalls im Restregister TR befindliche Testadresse TMADDR vom Sequenzer SQ ausgewählt. Damit können beliebige Mikrobefehlsadressen ROMA angesprungen und die zugehörigen Mikrobefehle MB danach ausgeführt werden.

Das Mikrowort von Fig.2 enthält neben der Sequenzsteuerung SC noch eine Adreßpointer-Steuerung APC und eine Datentransfer-Steuerung DSC neben der bereits besprochenen 'instruction type control' ITC. Eine Datensteuereinheit SDCU überwacht den Datentransfer. Eine Vorrichtung PIP1/PIP3 dient zum Pipelining bei der Ausführung verschiedener Mikrobefehle.

Im Mapdecoder MAPD werden die drei Bits der Steuerfunktion MAPCTR decodiert. Drei Bits ergeben acht mögliche Abfragebedingungen. Der Mapdecoder MAPD weist eine PLA ('programmable logic array') auf, an deren Eingängen verschiedene Gruppen von zu testenden Bedingungen und deren jeweilige Prioritätsstufung in Abhängigkeit von der jeweils aktuellen Steuerfunktion MAPCTR anliegen. An den Ausgängen dieser PLA werden in Abhängigkeit von der jeweils aktuellen Steuerfunktion MAPCTR, in Abhängigkeit von den von der aktuel-len Steuerfunktion MAPCTR angesprochenen Be-dingungen und in Abhängigkeit von deren Priorisierung in sich je nach höchster gültiger Priorität verschiedene Adressen MAPADDR erzeugt.

Wie eine PLA, bei der bestimmte Ausgänge eine vorgegebene Abhängigkeit von bestimmten Eingängen haben, hergestellt und benutzt werden kann, kann der Fachmann dem Lehrbuch von C. Mead und L. Conway, 'Introduction to VLSI Systems', Addison-Wesley, insbesondere dem Kapitel 3.10 'The Programmable Logic Array' entnehmen.

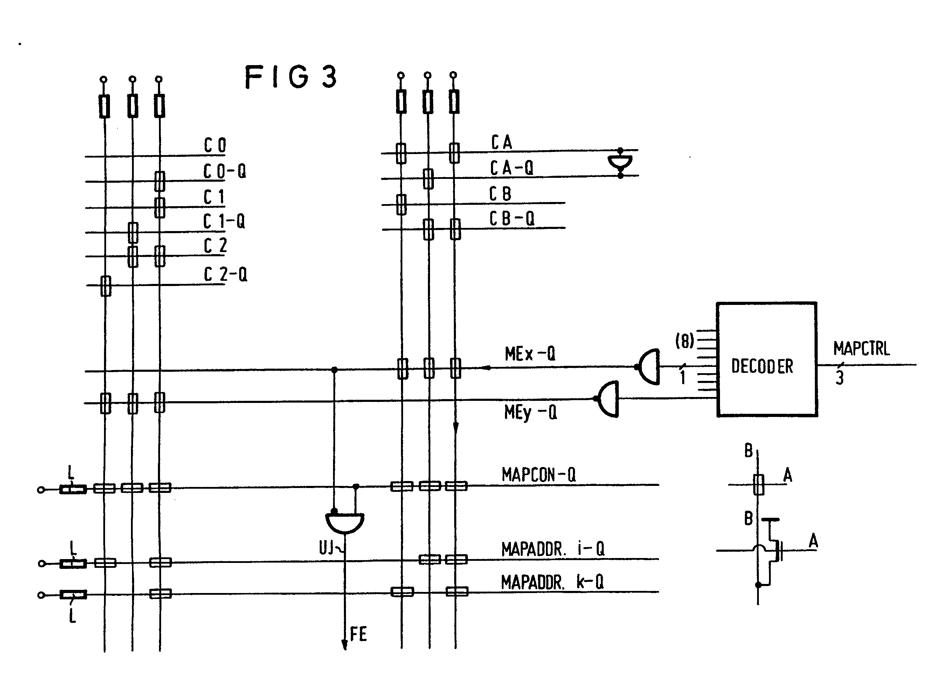

Figur 3 zeigt das Konstruktionsprinzip für eine PLA für einen Mapdecoder MAPD. Die drei Steuerbits MAPCTR, die in Figur 3 mit MAPCTRL bezeichnet sind, treffen auf einen DECODER, der acht Ausgänge aufweist. Die invertierten Ausgänge(MEx-Q, MEy-Q;ME-Y = invertiertes Signal MAPENABLE) sind jeweils an die Basis von mehreren MOS-Transistoren angeschlossen. Bei einem rein statischen Decodierfall weisen die Bedingungen CA, CB und deren invertierte Signale CA-Q, CB-Q unter sich keine Prioritätsstufung auf. Die Bedingungen CA und CB können aus Steuerregistern, Statusregistern und aus der Errorerkennung stammen. Die Bedingungen CA, CB und ihre inver-tierten Signale steuern verschiedene Basiselektro-den von MOS-Transistoren so, daß über verschiedene Leitungen, an denen die DrainElektroden dieser MOS-Transistoren angeschlossen sind, drei von den vier möglichen Kombinationen bei gegebenen Bedingungen CA, CB abgefragt werden können. Über die Leitung MEx-Q wird abgefragt, welche von diesen drei Kombinationen gültig sind. Das Ergebnis dieses Abfragens wird wiederum über MOS-Transistoren der invertierten Steuerleitung MAPCON-Q mitgeteilt. Ist die vierte Kombinationsmöglichkeit der Bedingungen CA, CB, die über die Leitung MEx-Q nicht abgefragt wird, erfüllt, so ist die Leitung MAPON nicht aktiviert. Ist die Leitung MAPCON aktiviert, so wird gleichzeitig über die Basiselektroden von MOS-Transistoren eine Mapadresse über die invertierten Signale MAPADDRi-Q, MAPADDRk-Q ausgewählt. Ist sowohl das Signal MEx-Q eine logische Null und ist zugleich das invertierte Steuersignal MAPCON-Q eine logische Eins, so wird über ein Gatter UJ ein unbedingter Sprung über ein Ausgangssignal FE (fatal error) veranlaßt.

Bei einem priorisierenden Decodierfall weist eine Bedingung C2 die höchste Priorität, eine Bedingung C1 die zweithöchste Priorität und eine Bedingung CO die niedrigste Priorität auf. An diejenige Leitung, die bei vorliegender Bedingung C2 aktiviert wird, ist von den Signalen für diese drei Bedingungen und ihre invertierten Signale nur ein einziger MOS-Transistor angeschlossen, dessen Basis von dem invertierten Signal C2-Q gesteuert wird. An die Leitung, die aktiviert wird, wenn die Bedingung C1 die höchste gültige Priorität aufweist, sind zwei MOS-Transistoren angeschlossen, deren Basiselektroden einmal von dem invertierten Signal C1-Q und zum anderen von dem Signal C2 gesteuert werden. Der dritten Leitung, die bei Vorliegen der Bedingung CO mit der höchsten gültigen Priorität aktiviert wird, sind drei MOS-Transi-storen angeschlossen, deren Basiselektroden ein-mal von dem Signal C1, zum anderen von dem Signal C2 und zum dritten von dem invertierten Signal COQ gesteuert werden. Das Vorliegen dieser zuletzt genannten Bedingungen zusammen mit ihrer inneren Priorisierung wird über die Leitung MEy-Q abgefragt. Die Aktivierung der Mapdecoder-Ausgänge entspricht dem rein statischen Decodierfall. Die Leitungen, die durch Ansteuern der Basiselektroden von MOS-Transistoren auf eine logische Null durchgeschaltet werden, sind über Lasttrensistoren L an eine Versorgungsspannung angeschlossen.

Um bei einem Fertigungstest des elektronischen Beusteines den Inhalt dem Mikrobefehlsspeichers ROM auslesen zu können, kann ein Bit ROMSPILL gesetzt werden. Bei aktiviertem ROMSPILL wird die inkrementierte aktuelle Mikroprogrammadresse mit einer solchen Priorität als nächste aktuelle Mikrobefehlsadresse ROMA ausgewählt, die nur noch von der Priorität der Auswahl der Testadresse bei gesetztem Bit TAE übertroffen wird.

**Patentansprüche**

1. Vorrichtung mit einem Sequenzer (SQ) zum Bereitstellen einer folgenden Mikroadresse (ROMA), die im Mikrohefehlspeicher (ROM) den ihr zugeordneten, folgenden Mikrobefehl (MB) adressiert, der dann in einem Mikrobefehlszwischenspeicher (MLATCH) gespeichert wird und mit einem Soft-Dekodierer (SOFTD) zum Testen von Sprungbedingungen (JUMPCTR), deren zugeordnete Sprungadresse (JUMPADDR) im Mikrobefehl enthalten ist, **dadurch gekennzeichnet, daß** die Sprungbedingungen (JUMPCTR) im Mikrobefehl enthalten sind, daß an den Sequenzer (SQ) ein Map-Dekodierer (MAPD) zum Testen von Map-Bedingungen (MAPCTR), die ebenfalls im Mikrobefehl enthalten sind, angeschlossen ist und daß bei Auftreten übereinstimmender Map-Bedingungen (MAPCTR) am Sequenzer (SQ) ein Signal (MAPCON) anliegt, das diesem die im Map-Dekodierer (MAPD) generierte, folgende Mikroadresse (ROMA) zuführt.

2. Vorrichtung nach Anspruch 1, **gekennzeichnet** durch Mittel (TR, TAE) zur Bereitstellung einer Testadresse (TMADDR).

3. Vorrichtung nach Anspruch 1 oder 2, **gekennzeichnet** durch Mittel (INCR, MUX, URG) zur Bereitstellung einer 'continue' -Adresse (CADDR).

4. Vorrichtung nach einem der Ansprüche 1 bis 3, **dadurch gekennzeichnet, daß** der Map-Dekodierer (MAPD) eine PLA aufweist.

5. Verfahren zur Folgeadreß-Bildung eines mikroprogrammgesteuerten Sequenzers (SQ) wobei die bereitzustellende folgenden Mikroadresse (ROMA) im Mikrobefehlspeicher (ROM) den ihr zugeordneten, folgenden Mikrobefehl (MB) adressiert, der dann in einem Mikrobefehlszwischenspeicher (MLATCH) gespeichert wird unter Verwendung einer Vorrichtung mit einem Soft-Dekodierer (SOFTD) zum Testen von Sprungbedingungen (JUMPCTR), deren zugeordneten Sprungadresse (JUMPADDR) im Mikrobefehl enthalten ist, dadurch gekennzeichnet, daß die Sprungbedingungen (JUMPCTR) im Mikrobefehl enthalten sind, wobei an den Sequenzer (SQ) ein Map-Dekodierer (MAPD) zum Testen von Map-Bedingungen (MAPCTR), die ebenfalls im Mikrobefehl enthalten sind, angeschlossen ist und wobei bei Auftreten übereinstimmender Map-Bedingungen (MAPCTR) am Sequenzer (SQ) ein Signal (MAPCON) anliegt, das diesem die im Map-Dekodierer (MAPD) generierte, folgende Mikroadresse (ROMA) zuführt,

daß ein Feld mit Sprungbedingungen (JUMPCTR) in einem Mikrobefehl (MB) das Testen auf Erfüllung solcher Bedingungen veranlaßt und bei Erfüllung dieser Bedingungen dafür sorgt, daß eine gleichfalls in diesem Mikrobefehl (MB) enthaltene Sprungadresse (JUMPADDR) bereitgestellt wird, daß ein Feld mit Map-Steuerfunktion (MAPCTR) im Mikrobefehl (MB) die Bildung einer Mapadresse (MAPADDR) steuert, daß ein Mapdecodierer (MAPD) autonom eine Überprüfung der Map-Steuerfunktion (MAPCTR) an den dieser Steuerfunktion entsprechenden Signalen durchführt und ggf. autonom die zugehörige Mapadresse (MAPADDR) erzeugt, und daß der Mapdecodierer (MAPD) unter einer Gruppe von Bedingungen (die der Map-Steuerfunktion (MAPCTR) entsprechenden Signale), die durch die Map-Steuerfunktion (MAPCTR) angesprochen worden sind in Abhängigkeit von Status- und Zustandsinformationen eine Priosierung autonom vornimmt und in Abhängigkeit von der jeweils höchsten gültigen Priorität eine dieser höchsten gültigen Priorität entsprechende Mapadresse (MAPADDR) ausgibt.

6. Verfahren nach Anspruch 6, **dadurch gekennzeichnet, daß** eine Testadresse (TMADDR) in einem Testregister (TR) gespeichert wird und bei Vorliegen einer entsprechenden Anforderung (TAE) vom Sequenzer (SQ) ausgewählt wird.

7. Verfahren nach einem der Ansprüche 5 oder 6, **dadurch gekennzeichnet, daß** die Auswahl der 'continue'-Adresse (CADDR) durch ein Steuerbit (ORG) im Mikrobefehl (MB) gesteuert wird.

8. Verfahren nach einem der Ansprüche 5 bis 7, dadurch **gekennzeichnet, daß** eine 'continue'-Adresse (CADDR) ausgewählt wird, wenn keine Sprungbedingungen (JUMPCTR) oder andere höherpriore Bedingungen (MAPCTR, TAE) gesetzt bzw. erfüllt sind.

9. Verfahren nach einem der Ansprüche 5 bis[8] , dadurch **gekennzeichnet**, daß die Sprungadresse (JUMPADDR) dann ausgewählt wird, wenn die Sprungbedingungen (JUMPCTR) erfüllt sind und andere höherpriore Bedingungen (MAPCTR, TAE) nicht gesetzt bzw. erfüllt sind.

10. Verfahren nach einem der Ansprüche 5 bis 9 , dadurch **gekennzeichnet**, daß die Mapadresse (MAPADDR) dann ausgewählt wird, wenn die Mapbedingungen (MAPCTR) erfüllt sind und höherpriore Bedingungen (TAE) nicht gesetzt bzw. erfüllt sind.

11. Verfahren nach einem der Ansprüche 6 bis 10 , dadurch **gekennzeichnet,** daß die Testadresse (TMADDR) mit höchster Priorität ausgewählt wird, wenn die zugehörige Bedingung (TAE) gesetzt ist.

12. Verfahren nach einem der Ansprüche 5 bis 11 , dadurch **gekennzeichnet,** daß die Map-Steuerfunktion(MAPCTR) verschiedene Gruppen von zu testenden Bedingungen anspricht , die in sich verschiedene Prioritätsstufen zugewiesen bekommen haben und damit je nach höchster gültiger Priorität verschiedene Mapadressen (MAPADDR) erzeugen.

13. Verfahren nach einem der Ansprüche 5 bis 12 , dadurch **gekennzeichnet,** daß eine zu Testzwecken setzbare Bedingung (ROMSPILL) eine Einschleusung der inkrementierten Mikroprogrammadresse an einen internen Mikrobefehlsspeicher (ROM) mit einer Priorität bewirkt, die unmittelbar unter der Priorität der Einschleusung einer Testadresse (TMADDR) liegt.

**Claims**

1. Device having a sequencer (SQ) for providing a microaddress link (ROMA) which addresses in the microinstruction memory (ROM) the following microinstruction (MB) assigned to it, which is then stored in a microinstruction latch (MLATCH), and having a soft decoder (SOFTD) for testing jump conditions (JUMPCTR), the assigned jump address (JUMPADDR) of which is contained in the microinstruction, characterised in that the jump conditions (JUMPCTR) are contained in the microinstruction, in that a map decoder (MAPD) for testing map conditions (MAPCTR), which are likewise contained in the microinstruction, is connected to the sequencer (SQ), and in that when matching map conditions (MAPCTR) occur, a signal (MAPCON) is present at the sequencer (SQ), which signal feeds the microaddress link (ROMA) generated in the map decoder (MAPD) to this sequencer.

2. Device according to Claim 1, characterised by means (TR, TAE) for providing a test address (TMADDR).

3. Device according to Claim 1 or 2, characterised by means (INCR, MUX, URG) for providing a "continue" address (CADDR).

4. Device according to one of Claims 1 to 3, characterised in that the map decoder (MAPD) has a PLA.

5. Method for forming a link address of a microprogram-controlled sequencer (SQ), in which the microaddress link (ROMA) to be provided addresses in the microinstruction memory (ROM) the following microinstruction (MB) assigned to it, which is then stored in a microinstruction latch (MLATCH) using a device having a soft decoder (SOFTD) for testing jump conditions (JUMPCTR), the assigned jump address (JUMPADDR) of which is contained in the microinstruction, characterised in that the jump conditions (JUMPCTR) are contained in the microinstruction, a map decoder (MAPD) for testing map conditions (MAPCTR), which are likewise contained in the microinstruction, being connected to the sequencer (SQ) and a signal (MAPCON) being present at the sequencer (SQ) when matching map conditions (MAPCTR) occur, which signal feeds the microaddress link (ROMA) generated in the map decoder (MAPD) to this sequencer, in that a field with jump conditions (JUMPCTR) in a microinstruction (MB) initiates the testing for fulfilment of such conditions, and if these conditions are fulfilled ensures that a jump address (JUMPADDR), likewise contained in this microinstruction (MB), is provided, in that a field with map control function (MAPCTR) in the microinstruction (MB) controls the formation of a map address (MAPADDR), in that a map decoder (MAPD) autonomously performs checking of the map control function (MAPCTR) on the signals corresponding to this control function and, if necessary, autonomously generates the corresponding map address (MAPADDR), and in that the map decoder (MAPD) autonomously carries out a priority allocation, depending on status and state information, for a group of conditions (the signals corresponding to the map control function (MAPCTR)) which have been addressed by the map control function (MAPCTR), and, depending on the highest valid priority in each case, outputs a map address (MAPADDR) corresponding to this highest valid priority.

6. Method according to Claim 6, characterised in that a test address (TMADDR) is stored in a test register (TR) and is selected by the sequencer (SQ) if a corresponding request (TAE) is present.

7. Method according to one of Claims 5 or 6, characterised in that the selection of the "continue" address (CADDR) is controlled by a control bit (ORG) in the microinstruction (MB).

8. Method according to one of Claims 5 to 7, characterised in that a "continue" address (CADDR) is selected if no jump conditions (JUMPCTR) or other conditions (MAPCTR, TAE) having a higher priority are set or fulfilled.

9. Method according to one of Claims 5 to 8, characterised in that the jump address (JUMPADDR) is selected whenever the jump conditions (JUMPCTR) are fulfilled and other conditions (MAPCTR, TAE) having a higher priority are not set or fulfilled.

10. Method according to one of Claims 5 to 9, characterised in that the map address (MAPADDR) is selected whenever the map conditions (MAPCTR) are fulfilled and conditions (TAE) having a higher priority are not set or fulfilled.

11. Method according to one of Claims 6 to 10, characterised in that the test address (TMADDR) having the highest priority is selected when the corresponding condition (TAE) is set.

12. Method according to one of Claims 5 to 11, characterised in that the map control function (MAPCTR) addresses different groups of conditions to be tested which have been allocated inherently different priority rankings and consequently generate different map addresses (MAPADDR) depending on the highest valid priority.

13. Method according to one of Claims 5 to 12, characterised in that a condition (ROMSPILL) which can be set for test purposes causes a transfer of the incremented microprogram address to an internal microinstruction memory (ROM) with a priority immediately below the priority of the transfer of a test address (TMADDR).

**Revendications**

1. Dispositif comportant un séquenceur (SQ) pour préparer une micro-adresse suivante (ROMA), qui, dans la mémoire de micro-instructions (ROM), adresse la micro-instruction suivante (ME), qui lui est associée et qui est alors mémorisée dans une mémoire tampon de micro-instructions (MLATCH), et un décodeur logiciel (SOFTD) servant à tester des conditions de saut (JUMPCTR), dont l'adresse de saut associée (JUMPADDR) est contenue dans la micro-instruction, caractérisé par le fait que les conditions de saut (JUMPCTR) sont contenues dans la micro-instruction, qu'au séquenceur (SU) est raccordé un décodeur mappe (MAPD) pour tester des conditions de mappes (MAPCTR), qui sont également contenues dans la micro-instruction, et que lors de l'apparition de conditions de mappes (MAPCTR) coïncidantes, au séquenceur (SQ) est appliqué un signal (MAPCON), qui envoie au séquenceur la micro-adresse suivante (ROMA) produite dans le décodeur de mappes (MAPD).

2. Dispositif suivant la revendication 1, caractérisé par des moyens (TR,TAE) pour préparer une adresse de test (TMADDR).

3. Dispositif suivant la revendication 1 ou 2, caratérisé par des moyens (INCR, MUX, URG) pour préparer une adresse "continuation" (CADDR).

4. Dispositif suivant l'une des revendications 1 à 3, caractérisé par le fait que le décodeur de mappes (MAPD) comporte un réseau PLA.

5. Procédé de formation d'adresses successives d'un séquenceur (SQ) commandé par un microprogramme et selon lequel la micro-adresse suivante (ROMA), qui doit être préparée, adresse, dans la mémoire de micro-instructions (ROM), la micro-instruction suivante (MB), qui lui est associée et est alors mémorisée dans une mémoire tampon de micro-instructions (MLATCH), moyennant l'utilisation d'un dispositif comportant un décodeur logiciel (SOFTD) pour tester des conditions de saut (JUMPCTR), dont l'adresse de saut associée (JUMPADDR) est contenue dans la micro-instruction, caractérisé par le fait que les conditions de saut (JUMPCTR) sont contenues dans la micro-instruction, qu'au séquenceur (SQ) est raccordé un décodeur de mappes (MAPD) pour tester des conditions de mappes (MAPCTR), qui sont également contenues dans la micro-instruction, et que lors de l'apparition de conditions de mappes (MAPCTR) coïncidantes, à ce séquenceur (SQ) est appliqué un signal (MAPCON), qui envoie au séquenceur la micro-adresse suivante (ROMA) produite dans le décodeur de mappes (MAPD),

qu'une zone comportant des conditions de saut (JUMPCTR) déclenche, dans une micro-instruction (MB), le test pour déterminer si de telles conditions sont satisfaites et, lorsqu'elles le sont, veillent à ce qu'une adresse de saut (JUMPADDR) également contenue dans cette micro-instruction (MP), soit préparée, qu'une zone comportant la fonction de commande de mappes (MAPCTR) dans la micro-instruction (MB) commande la formation d'une adresse de mappe (MAPADDR), qu'un décodeur de mappes (MAPD) exécute de façon indépendante un contrôle de la fonction de commande de mappes (MAPCTR) sur les signaux correspondants à cette fonction de commande et produit éventuellement d'une manière indépendante l'adresse de mappe associée (MAPADDR), et que le décodeur de mappes (MAPD) réalise, de façon indépendante, une affectation de priorités en fonction d'informations de situation et d'état, parmi un groupe de conditions (les signaux correspondant à la fonction de commande de mappes MAPCD), qui ont été appelés par la fonction de commande de mappes (MAPCTR), et délivre une adresse de mappe (MAPADDR), qui correspond à la priorité valable maximale, en fonction de la priorité maximale valable respective.

6. Procédé suivant la revendication 6, caractérisé par le fait qu'une adresse de test (TMADDR) est mémorisée dans un registre de test (TR) et, lors de la présence d'une demande correspondante (TAE), est sélectionnée par le séquenceur (SQ).

7. Procédé suivant l'une des revendications 5 ou 6, caractérisé par le fait que la sélection de l'adresse "continuation" (CADD) est commandée par un bit de commande (ORG) dans la micro-instruction (MB).

8. Procédé suivant l'une des revendications 5 à 7, caractérisé par le fait qu'une adresse "continuation" (CADDR) est sélectionnée lorsqu'aucune condition de saut (JUMPCTR) ou d'autres conditions à priorité supérieure (MAPCTR, TAE) sont réglées ou satisfaites.

9. Procédé suivant l'une des revendications 5 à 8, caractérisé par le fait que l'adresse de saut (JUMPADD) est sélectionnée lorsque les conditions de saut (JUMPCTR) sont satisfaites et que d'autres conditions à priorité supérieure (MAPCTR, TAE) ne sont pas réglées ou satisfaites.

10. Procédé suivant l'une des revendications 5 à 9, caractérisé par le fait que l'adresse de mappe (MAPADDR) est sélectionnée lorsque les conditions de mappes (MAPCTR) sont satisfaites et que les conditions à priorité supérieure (TAE) ne sont pas réglées ou satisfaites.

11. Procédé suivant l'une des revendications 6 à 10, caractérisé par le fait que l'adresse de test (TMADDR) possédant la priorité maximale est sélectionnée lorsque la condition associée (TAE) est réglée.

12. Procédé suivant l'une des revendications 5 à 11, caractérisé par le fait que la fonction de commande de mappes (MAPCTR) répond à différents groupes de conditions devant être testés, auxquels ont été attribués des échelons de priorité en soi différents et produisent par conséquent différentes adresses de mappe (MAPADDR), en fonction de la priorité maximale valable.

13. Procédé suivant l'une des revendications 5 à 12, caractérisé par le fait qu'une condition (ROMSPILL), qui peut être réglée pour réaliser un test, provoque l'introduction de l'adresse incrémentée de microprogramme dans une mémoire interne de micro-instructions (ROM) avec une priorité directement inférieure à la priorité de l'insertion d'une adresse de test (TMADDR).

FIG 1

# FIG 2

EP 0 108 419 B1

FIG 3

EP 0 108 419 B1